# EUROPEAN PATENT APPLICATION

(11) **EP 2 103 852 A2**
(43) Date of publication of application: **23.09.2009**
(21) Application number: 09155555.7
(22) Date of filing: 19.03.2009
(51) Int. Cl.: F16K 11/085

(54) **Flow rate regulating valve**

(30) Priority: 21.03.2008 JP 2008074179
(71) Applicant: Fujikoki Corporation, Tokyo (JP)
(72) Inventor: Tamura, Youko, Setagaya-ku, Tokyo (JP); Satou, Masaya, Setagaya-ku Tokyo (JP); Umezawa, Hitoshi, Setagaya-ku Tokyo (JP)
(74) Representative: Schweiger, Martin

(57) **Abstract**

The invention provides a compactly structured flow rate regulating valve, in which reduction of the number of parts, improvement of an assembling workability, cost reduction, downsizing, weight saving and the like can be achieved, and frictional resistance and abrasion between a valve body can be reduced and a valve main body as much as possible, so that abrasion powder can be prevented from mixing into fluid. A flow rate regulating valve is provided with a valve main body (10) having, a cylindrical valve chamber (14) with a ceiling portion (35), at least one side portion port (11, 12) which is open at the valve chamber (14), and a bottom portion port (13) which is open coaxially with the valve chamber (14), and a lower end opened cylindrical valve body (20) rotatably installed in the valve chamber (14) of the valve main body (10), and provided with an opening portion (30) having a predetermined shape in a peripheral wall portion (22) for changing an opening area of the side portion ports (11, 12) in accordance with a rotation. The valve body (20) is installed from the bottom portion port (13), a rotating shaft (25) provided in a protruding manner at a ceiling portion (23) of the valve body (20) protrudes from a bearing hole (36) of the valve main body (10) in this installed state, and a valve body locking device (40), which allows rotation of the valve body (20) but prevents the valve body from coming off downward, is installed at a protruded portion of the rotating shaft (25) from the valve main body (10).

## Description

### BACKGROUND OF THE INVENTION

### Field of the Invention

The present invention relates to a flow rate regulating valve, for example, a flow rate regulating valve which is suitable for being used in a water heater or the like for obtaining warm water having a desired temperature by mixing water and hot water.

### Description of the Conventional Art

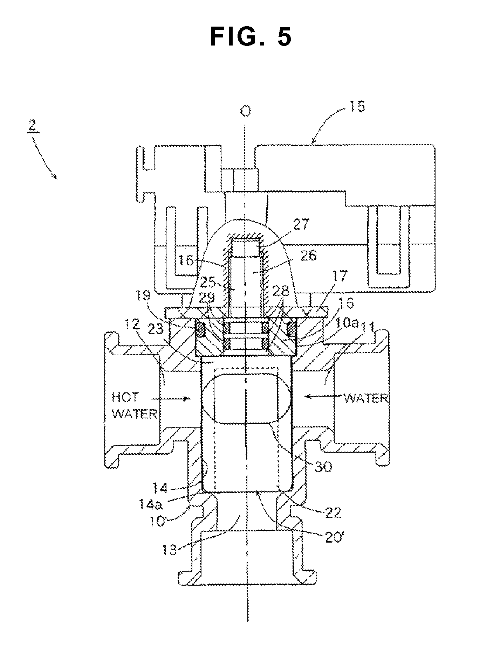

As this kind of flow rate regulating valve, there has been conventionally considered, for example, a structure as shown in Fig. 5. A description will be briefly given of a flow rate regulating valve 2 of an illustrated example.

The flow rate regulating valve 2 of the water heater or the like is used in the water heater for obtaining warm water having the desired temperature by mixing water and hot water, has a cylindrical valve chamber 14 with ceiling portion, is provided with side portion ports 11 and 12 which are open at a peripheral wall portion of the valve chamber 14, and is also provided with a valve main body 10' having a bottom portion port 13 which is open coaxially with the valve chamber 14, a valve body 20' which is rotatably installed within the valve chamber 14 of the valve main body 10' and is rotated around a rotation axis O, and a stepping motor 15 serving as a driving means for rotating the valve body 20'.

The side portion ports 11 and 12 are arranged so as to be spaced at an angular interval of 180 degree.

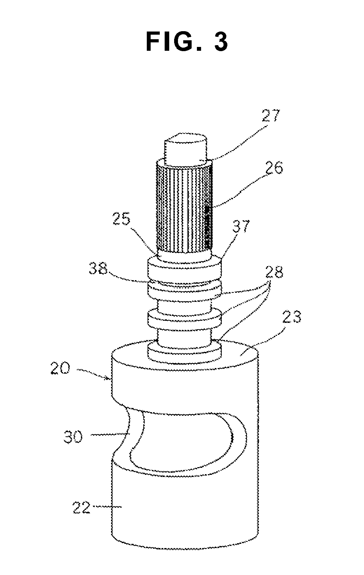

The valve body 20' is formed in a cylindrical shape having an opening at a lower end, is structured such that a peripheral wall portion 22 thereof serves as a seal surface portion for closing the side portion ports 11 and 12, and is provided with an opening portion 30 in a predetermined shape (in this case, an oval shape having semicircles at both ends) in the peripheral wall portion 22 for changing an opening area of the side portion ports 11 and 12 in accordance with a rotation of the valve body 20' (refer also to Fig. 3 showing the valve body 20 in accordance with an embodiment). The opening portion 30 is open at about 180 degree on the basis of a rotation angle of the valve body 20'.

A rotating shaft 25 is provided in a protruding manner at the center of a top surface of a ceiling portion 23 of the valve body 20'. A lower portion of the rotating shaft 25 is provided with installation grooves constituted by three-stage collar portions 28 for installation of O-rings 29 and 29, and an upper portion thereof is provided with a serration shaft portion 26 for coupling to (a shaft of) a rotor of the stepping motor so as to be integrally rotatable, and a convex portion 27 having a noncircular cross section (D-cut shape or the like).

On the other hand, an installation hole 10a is provided at an upper portion of the valve chamber 14 in the valve main body 10', a bearing 16 for rotatably supporting the ceiling portion 23 of the valve body 20' and a lower portion of the rotating shaft 25 (the portion to which the O-rings 29 and 29 are installed) is fixed to the installation hole 10a in accordance with a press fitting method or the like, and the stepping motor 15 is attached onto the bearing 16 via an attaching plate 17 by bolts and nuts. In this case, a seal member 19 such as an O-ring or the like is installed between the installation hole 10a and the bearing 16. Further, a lower end of the valve chamber 14 of the valve main body 10' is provided with a valve body seat 14a for receiving (a lower end surface of) the valve body 20'.

### SUMMARY OF THE INVENTION

### Problem to be Solved by the Invention

The conventional flow rate regulating valve 2 mentioned above has the following problems to be improved.

Since the flow rate regulating valve 2 is structured such as to assemble the valve body 20' in the valve main body 10' via the installation hole 10a in a manner of bringing it down from the above, parts (the bearing 16 and the seal member 19) for plugging the installation hole 10a are necessary for preventing water leakage to an external portion. In addition, since a lot of coupling and fixing positions exist among the valve main body 10', the bearing 16, the attaching plate 17 and the motor 15, the number of parts is increased, and problems are caused in the light of assembling workability, a cost, weight saving and the like.

Further, since the structure is made such as to prevent the valve body 20' from coming off downward by the seat 14a, an abrasion tends to be caused by slidable contact between the lower end surface of the valve body 20' and the valve body seat 14a, and there is a problem that abrasion powder generated at that time mixes into the fluid (the warm water).

Further, in the flow rate regulating valve 2, since the valve body 20' is structured such that its position (a position in vertical, right-and-left and back-and-forth directions, a position of a rotating axis) is regulated by two members comprising the valve main body 10' and the bearing 16, a center axis of the valve main body 10' and a center axis of the bearing 16 tend to be displaced due to an assembling error of the bearing 16 with respect to the valve main body 10' or the like. Accordingly, a displacement and an inclination of in (the rotating axis of) the valve body 20' are caused. As a result, there is a risk that the valve body 20' and the valve main body 10' eccentrically contact with each other and a frictional resistance and an abrasion become large. With regard to such the displacement (ensuring of concentricity), since an influence of the seal member 19 such as the O-ring or the like interposed between the installation hole 15 and the bearing 16 is added to the factor mentioned above, a drastic improvement is necessary for ensuring the concentricity.

In addition to the above, since the seat 14a is necessary, there is a tendency that the valve main body 10' becomes longer at that degree, and there is a problem that a forming metal mold becomes complicated.

The present invention is made by taking the circumstances mentioned above into consideration, and an object of the present invention is to provide a compactly structured flow rate regulating valve, in which reduction of the number of parts, improvement of assembling workability, cost reduction, downsizing, weight saving and the like can be achieved, and frictional resistance and abrasion between a valve body and a valve main body can be reduced as much as possible, so that abrasion powder can be prevented from mixing into fluid.

### Means for Solving the Problem

In order to achieve the object mentioned above, a flow rate regulating valve in accordance with the present invention basically comprises:
a valve main body having a cylindrical valve chamber with ceiling portion, at least one side portion port which is open at a peripheral wall portion of the valve chamber, and a bottom portion port which is open coaxially with the valve chamber; and
a lower end opened cylindrical valve body rotatably installed in the valve chamber, and provided with an opening portion at a peripheral wall portion for changing an opening area of the side portion port in accordance with a rotation,
wherein the valve body is installed from the bottom portion port, a rotating shaft provided in a protruding manner at the ceiling portion of the valve bodyprotrudes from a bearing hole of the valve main body in this installed state, and a valve body locking device, which allows rotation of the valve body but prevents the valve body from coming off downward, is installed at a protruded portion of the rotating shaft from the valve main body.

The present invention can be applied, for example, to a mixing valve structured such that two side portion ports are provided, a first fluid and a second fluid are introduced to one side portion port and the other respectively, a mixing rate of the first fluid and the second fluid is changed on the basis of a rotating motion of the valve body, and a mixed fluid flows out of a bottom portion port.

In this case, the first fluid can be hot water, and the second fluid can be water.

In accordance with another preferable aspect, a large-diameter portion is formed at an upper side than the bearing hole of in the rotating shaft, and the valve body locking device is installed to an outer periphery of the rotating shaft at a position between the large-diameter portion and the bearing hole.

The valve body locking device is preferably made of one elastic wire rod which is bent approximately in a V-shape or U-shape, and is constructed by a clip which is provided with a pair of pinching piece portions having circular arc shaped portions to be pressure-contacted with and fitted to an outer periphery of the rotating shaft, and a bent spring portion for coupling the pair of the pinching piece portions and energizing them in a returning back direction at a time when they are expanded in a direction to make them apart from each other.

In accordance with another preferable aspect, a seal member such as an O-ring or the like is installed between the rotating shaft and the bearing hole.

### Effect of the Invention

Since the flow rate regulating valve in accordance with the present invention is structured such that the valve body is assembled in the valve main body by being inserted from the lower side, it becomes unnecessary to use the parts (the bearing, the seal member, the attaching plate and the like) for plugging the installation hole, which have been necessary for preventing a water leakage to an external portion, and it is possible to achieve reduction of number of the parts, improvement of the assembling workability, cost reduction, downsizing, weight saving, and the like.

Further, since the bearing hole, through which the rotating shaft of the valve body is inserted from the lower side, is formed at the ceiling portion of the valve chamber in the valve main body, and the valve body locking device, which allows the rotation of the valve body but prevents the valve body from coming off downward, is installed at the upper side than the bearing hole of the rotating shaft, the valve body seat, which has been necessary in the prior art, is not necessary. While abrasion powder is generated in the inner portion of the valve main body on the basis of slidable contact between the lower end surface of the valve body and the valve body seat in the prior art, however, in the flow rate regulating valve structured as mentioned above in accordance with the present invention, even if abrasion powder is generated on the basis of slidable contact between the valve body locking device and the valve body or (the ceiling portion top surface of) the valve main body, it occurs outside the valve main body, and the abrasion powder does not mix into the fluid.

Further, since the valve body is structured such that its position (a position in the vertical, right-and-left and back-and-forth directions, and a position of the rotating axis) is regulated only by the valve main body (one member), the displacement and the inclination of (the rotating axis of) the valve body are hardly caused, in comparison with the case that the position is regulated by two members like as the prior art. As a result, it is possible to effectively reduce the friction resistance and the abrasion between the valve body and the valve main body.

### BRIEF EXPLANATION OF DRAWINGS

Fig. 1 is a partly notched front view showing an embodiment of a flow rate regulating valve in accordance with the present invention;
Fig. 2 is a sectional view as seen in a direction shown by arrows X-X except a motor portion in the flow rate regulating valve shown in Fig. 1;
Fig. 3 is a perspective view showing a valve body of the flow rate regulating valve shown in Fig. 1;
Figs. 4 (A), 4(B) and 4 (C) are views provided for explaining a clip for serving as a valve body locking device used in the flow rate regulating valve shown in Fig. 1 and an attaching method thereof, in which Fig. 4(A) is a plan view of the clip, Fig. 4(B) is a plan view of the flow rate regulating valve during clip attachment, and Fig. 4(C) is a plan view of the flow rate regulating valve after finish of the clip attachment; and
Fig. 5 is a partly notched front view showing a flow rate regulating valve in accordance with a prior art.

### DETAILED DESCRIPTION OF PREFERRED EMBODIMENT

A description will be given below of an embodiment of a flow rate regulating valve in accordance with the present invention with reference to the accompanying drawings.

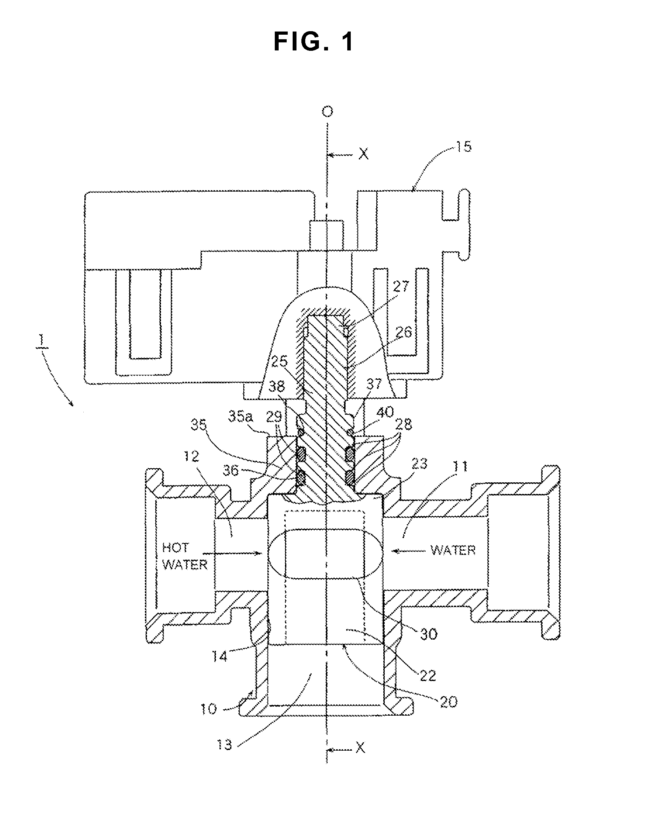

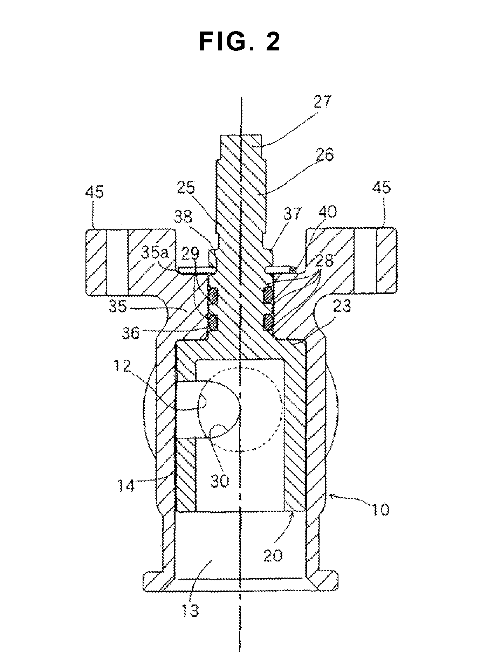

Fig. 1 is a partly notched front view showing an embodiment of a flow rate regulating valve in accordance with the present invention, Fig. 2 is a sectional view as seen in a direction shown by arrows X-X except a motor portion in Fig. 1, and Fig. 3 is a perspective view of a valve body in accordance with the present embodiment. In Fig. 1, a detailed description is omitted by attaching common reference numerals to portions corresponding to the portions of the flow rate regulating valve 2 shown in Fig. 5 mentioned above, and a description will be given below of different points mainly.

A flow rate regulating valve 1 in accordance with the present embodiment is a mixing valve for obtaining warm water having a desired temperature by regulating a mixing rate of water and hot water, has a valve main body 10, a valve body 20 and a stepping motor 15, and is structured such that the valve body 20 is assembled in the valve main body 10 by being inserted from a lower side. The valve main body 10 is provided with a cylindrical valve chamber 14 with a comparatively thick ceiling portion 35, side portion ports 11 and 12 which are open at a peripheral wall portion of the valve chamber 14 so as to be spaced at an angular interval of 180 degrees, and a bottom portion port 13 which is open coaxially with the valve chamber 14.

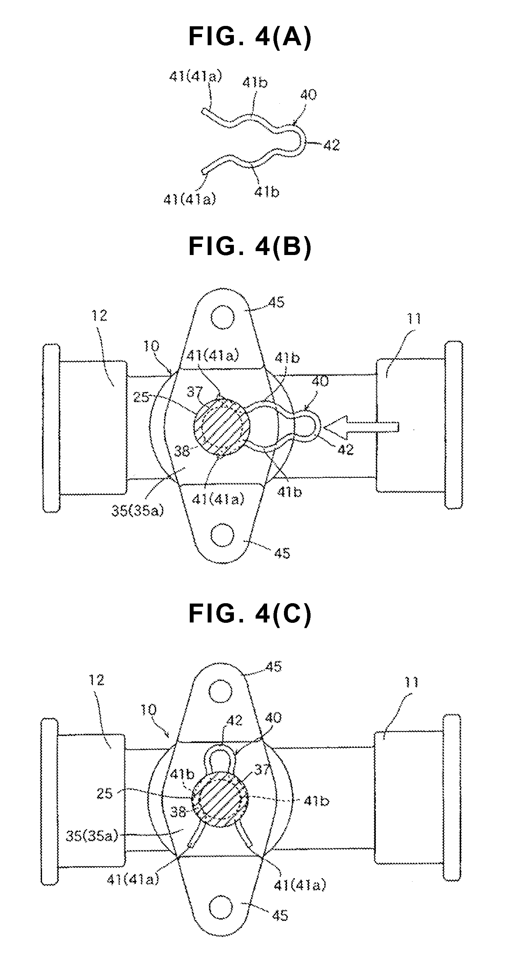

Further, attaching pedestals 45 and 45 for attaching the motor 15 to the valve main body 10 are provided at positions which are rotated at 90 degrees with respect to the side portion ports 11 and 12 in a plan view at a top portion (the ceiling portion 35) of the valve main body 10, in such a manner as to protrude upward and right and left sides, as shown in Figs. 2, 4B and 4C.

The valve body 20 is formed in a cylindrical shape with an opened lower end, is installed rotatably in the valve chamber 14 of the valve main body 10, and is structured such that its ceiling portion 23 is brought into contact with a lower surface of the ceiling portion 35 of the valve main body 10, as shown in Fig. 3. A peripheral wall portion 22 of the valve body 20 is provided with an opening portion 30 in a predetermined shape (in this case, an oval shapes with semicircles at both ends), for changing opening areas of the side portion port 11 and the side portion port 12 in accordance with a rotation. The opening portion 30 is opened at about 180 degrees in a rotational angle of the valve body 20.

A rotating shaft 25 is provided to protrude above the ceiling portion 23 of the valve body 20, and a bearing hole 36 through which the rotating shaft 25 of the valve body 20 is inserted from a lower side is formed in the ceiling portion 35 of the valve main body 10. A lower portion of the rotating shaft 25 is provided with installation grooves constructed by three-stage collar portions 28 for installation of O-rings 29 and 29, and an upper portion thereof is provided with a serration shaft portion 26 for coupling to (a shaft of) a rotor of a stepping motor so as to be integrally rotatable, and a convex portion 27 having a noncircular cross section (a D-cut shape or the like).

In addition, a large-diameter portion 37 having the same diameter as the collar portions 28 is formed at a position between a lower end of the serration shaft portion 26 and the highest stage collar portion 28 (slightly above an upper end surface of the bearing hole 36) in the rotating shaft 25, and a clip 40 for serving as a valve body locking device, which allows rotation of the valve body 20 but prevents the valve body 20 from coming off downward, is installed to an outer periphery of a position (an installation portion 38) between the large-diameter portion 37 and the highest stage collar portion 28.

The clip 40 is made of one elastic wire rod which is bent approximately in a V-shape or U-shape, and is constructed by a pair of pinching piece portions 41 and 41 having leading end guide portions 41a which are open outward, circular arc shaped portions 41b which are pressure-contacted with and fitted to an outer periphery of the installation portion 38 of the rotating shaft 25, and a bent spring portion 42 for coupling a pair of the pinching piece portions 41 and 41 and energizing them in a returning back direction at a time when they are expanded in a direction to make them apart from each other, as shown in Fig. 4A. Since the clip 40 as mentioned above is available as a general purpose product, it is possible to make a part cost inexpensive.

After the rotating shaft 25 of the valve body 20 is inserted into the bearing hole 36 from a lower side, the clip 40 is pressed to the installation portion 38 of the rotating shaft 25 from the side portion port 11 side until the circular arc shaped portions 41b and 41b following the leading end guide portions 41a and 41a, are outside fitted to the installation portion 38 as shown in Fig. 4B, and thereafter rotated at 90 degree in a counterclockwise direction as shown in Fig. 4C. Accordingly, the clip 40 is mounted onto a top surface 35a of the ceiling portion 35, and the whole of the valve body 20 is locked by the clip 40 in a state of allowing the rotation but preventing the downward coming-off, with the large-diameter portion 37.

As mentioned above, since the flow rate regulating valve 1 in accordance with the present embodiment is structured such that the valve body 20 is assembled in the valve main body 10 by inserting the valve body 20 to the valve main body 10 from the lower side by using the clip 40, it becomes unnecessary to use the parts (the bearing 16, the seal member 19, the attaching plate 17 and the like) for plugging the installation hole which have been necessary in the prior art for preventing a water leakage to an external portion, and it is possible to achieve reduction of the number of parts, improvement of the assembling workability, cost reduction, downsizing, weight saving, and the like.

Further, since the bearing hole 36, through which the rotating shaft 25 of the valve body 20 is inserted from the lower side, is formed at the ceiling portion 35 of the valve chamber 14 in the valve main body 10, and the clip 40, which allows the rotation of the valve body 20 but prevents the valve body 20 from coming off downward, is installed at the upper side than the bearing hole 36 of the rotating shaft 25, the valve body seat 14a, which is necessary in the prior art, becomes unnecessary. While the abrasion powder is generated in the inner portion of the valve main body 10 by slidable contact between the lower end surface of the valve body 20 and the valve body seat 14a in the prior art, however, in the flow rate regulating valve 1 in accordance with the present embodiment as mentioned above, even if the abrasion powder is generated by the slidable contact between the clip 40 and the valve body 20 (or the top surface 35a of the ceiling portion 35 of the valve main body 10), the abrasion powder do not mix into the warm water because it occurs outside the valve main body 10.

Further, since the valve body 20 is structured such that its position (a position in the vertical, right-and-left and back-and-forth directions and a position of the rotating axis) is regulated only by the valve main body 10 (one member), the displacement and the inclination of (the rotating axis O of) the valve body 20 are hardly caused in comparison with the case that the position is regulated by two members like as the prior at. As a result, it is possible to effectively reduce the frictional resistance and the abrasion between the valve body 20 and the valve main body 10.

In this case, in the embodiment mentioned above, the valve main body 10 and the valve body 20 are made of a synthetic resin (for example, POM, PPS or the like), however, they may be made of a metal. In general, the synthetic resin structure is superior to the metal structure in a sliding performance.

Further, in the embodiment mentioned above, the description is given of the case that the present invention is applied to the flow rate regulating valve structured such that warm water having a desired temperature is obtained by regulating the mixing rate of hot water and water, however, the present invention can be applied to a flow rate regulating valve for mixing plural kinds of other fluids than water and hot water.

Further, in the embodiment mentioned above, the description is given of the case that the present invention is applied to the angle valve which is provided with two side portion ports in the peripheral wall portion of the valve chamber, and is provided with the bottom portion port which is open coaxially with the valve chamber, however, the present invention can be applied to an angle valve which is provided with one side portion port in the peripheral wall portion of the valve chamber, and is provided with the bottom port which is open coaxially with the valve chamber.

In addition, the embodiment can be variously modified within the scope of the present invention.

## Claims

1. A flow rate regulating valve comprising:
a valve main body having a cylindrical valve chamber with ceiling portion, at least one side portion port which is open at a peripheral wall portion of said valve chamber, and a bottom portion port which is open coaxially with said valve chamber; and
a lower end opened cylindrical valve body rotatably installed in said valve chamber, and provided with an opening portion in a peripheral wall portion for changing an opening area of said side portion port in accordance with a rotation,
wherein said valve body is installed from said bottom portion port, a rotating shaft provided in a protruding manner at a ceiling portion of said valve body protrudes from a bearing hole of said valve main body in this installed state, and
wherein a valve body locking device which allows rotation of said valve body but prevents the valve body from coming off downward, is installed at a protruded portion of said rotating shaft from said valve main body.

2. A flow rate regulating valve as claimed in claim 1, wherein two of said side portion ports are provided, first fluid and second fluid are introduced to one side portion port and the other respectively, a mixing rate of the first fluid and the second fluid is changed on the basis of a rotating motion of said valve body, and mixed fluid flows out of said bottom portion port.

3. A flow rate regulating valve as claimed in claim 2, wherein said first fluid is hot water, and said second fluid is water.

4. A flow rate regulating valve as claimed in any one of claims 1 to 3, wherein a large-diameter portion is formed at an upper side than said bearing hole of said rotating shaft, and said valve body locking device is installed to an outer periphery of said rotating shaft at a position between said large-diameter portion and said bearing hole.

5. A flow rate regulating valve as claimed in any one of claims 1 to 4, wherein said valve body locking device is made of one elastic wire rod which is bent approximately in a V-shape or U-shape, and is constructed by a clip which is provided with a pair of pinching piece portions having circular arc shaped portions to be pressure contacted with and fitted to an outer periphery of said rotating shaft, and a bent spring portion for coupling said pair of pinching piece portions and energizing them in a returning back direction at a time when they are expanded in a direction to make them apart from each other.

6. A flow rate regulating valve as claimed in any one of claims 1 to 5, wherein a seal member such as an O-ring or the like is installed between said rotating shaft and said bearing hole.
